# EUROPEAN PATENT SPECIFICATION

(11) **EP 1 695 928 B1**
(45) Date of publication and mention of the grant of the patent: **20.11.2013**
(21) Application number: 06100896.7
(22) Date of filing: 26.01.2006
(51) Int. Cl.: B65G 49/06

(54) **Apparatus for handling sheet-like products in packs and as individual sheet-like products**
Vorrichtung zum Transport von einzelnen und geschichten Scheibenprodukten
Appareil pour manutentioner des feuilles ou produits similaires en paquet ou à l'unité

(30) Priority: 18.02.2005 IT PD20050044
(43) Date of publication of application: 30.08.2006
(73) Proprietor: Piazza, Alessandro, 36015 Schio (Prov. of Vicenza) (IT); Piazza, Marco, 36015 Schio (Prov. of Vicenza) (IT)
(72) Inventor: Piazza, Alessandro, 36015 Schio (Prov. of Vicenza) (IT); Piazza, Marco, 36015 Schio (Prov. of Vicenza) (IT)
(74) Representative: Modiano, Micaela Nadia

(56) References cited:
- EP-A- 1 300 352
- EP-A- 1 388 511
- EP-A- 1 471 017
- DE-A1- 3 336 937
- FR-A- 1 535 619
- JP-A- 63 008 118
- US-A- 3 595 556
- US-A- 3 679 073
- US-A- 4 673 325

## Description

The present invention relates to an apparatus for handling sheet-like products in crates, in packs and as individual sheet-like products.

The invention also relates to an apparatus for handling sheet-like products only in packs.

The invention is used particularly with packs of sheet-like products, such as large glass sheets and the like, to be accommodated in storage units particularly but not exclusively of the type with inclined frames and perpendicular translational motion.

Various handling machines or lines are currently known for moving glass sheets from a storage unit to a region for easy handling and vice versa.

Storage units used in storing glass sheets usually have a plurality of frames, which are all inclined in the same manner and are arranged in a storage area; for example, among these frames, those with perpendicular translational motion are known.

For transport, sheet-like products are generally packaged in packs or crates which contain several products, and such packs are deposited on the inclined frames of the storage unit.

Said packs are generally conveyed to the inclined frames and deposited onto them by means of fork-type lifting units, which hang from a hoist which in turn can move on scaffolding which lies above the storage unit and determines the path that packs must follow in order to reach the frames.

This scaffolding, in addition to being expensive and bulky, limits the extension of the storage unit, since it must rest on fixed structural columns, which indeed restrict the region within which it is possible to arrange the inclined frames of the storage unit to the area that lies below said scaffolding.

Further, the lifting unit, which hangs from a hook which in turn hangs from a pulley, is susceptible to oscillations produced by the inertia of the pack being conveyed.

This unwanted movement can be dangerous for the stability of the pack on the lifting unit and for the safety of personnel, which might inadvertently be in the vicinity of such a lifting unit.

EP 1 471 017 and US 4 673 3245 disclose an apparatus for handling sheet-like products.

The aim of the present invention is to provide an apparatus for handling sheet-like products in crates, in packs and as individual sheet-like products which is capable of obviating the drawbacks revealed by known types of conveyance apparatus.

Within this aim, an object of the present invention is to provide an apparatus which can be used easily in the most disparate storage unit layouts.

Another object of the present invention is to provide an apparatus which is versatile and flexible in use.

Another object of the present invention is to provide an apparatus which allows to automate the operations for loading and unloading the packs of sheet-like products as well as the sheet-like products themselves.

Another object of the present invention is to provide an apparatus which is independent of the structures of the space in which it is installed.

Another object of the present invention is to provide an apparatus which is safer than known types of apparatus.

Another object of the present invention is to provide an apparatus which is more precise and faster than known apparatuses and at the same time retains a loading capacity which is not lower than that of the known apparatuses.

Another object of the present invention is to provide an apparatus for handling sheet-like products in crates, in packs and as individual sheet-like products which can be combined easily with known and active lines for processing sheet-like products.

Another object of the present invention is to provide an apparatus for handling only sheet-like products in packs.

Another object of the present invention is to provide an apparatus for handling sheet-like products in crates, in packs and as individual sheet-like products which can be manufactured with known systems and technologies at lower costs than conventional apparatuses of equal capacity.

This aim and these and other objects, which will become better apparent hereinafter, are achieved by an apparatus for handling sheet-like products in crates, in packs and as individual sheet-like products, particularly but not exclusively for storage units with perpendicular translational motion, as defined in claim 1.

Further characteristics and advantages of the invention will become better apparent from the following detailed description of two preferred but not exclusive embodiments thereof, illustrated by way of non-limiting example in the accompanying drawings, wherein:

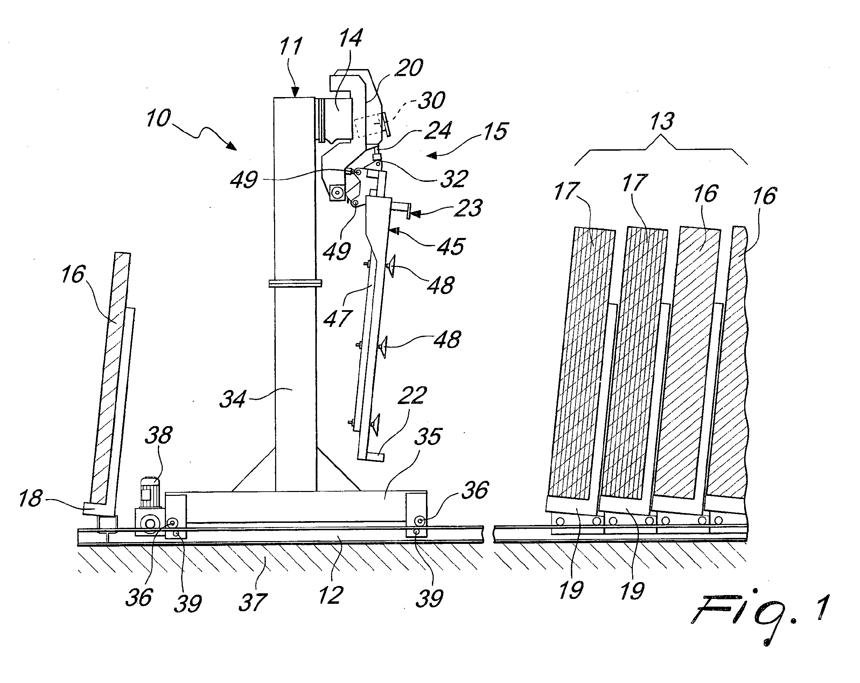

Figure 1 is a side view of an apparatus according to the invention;

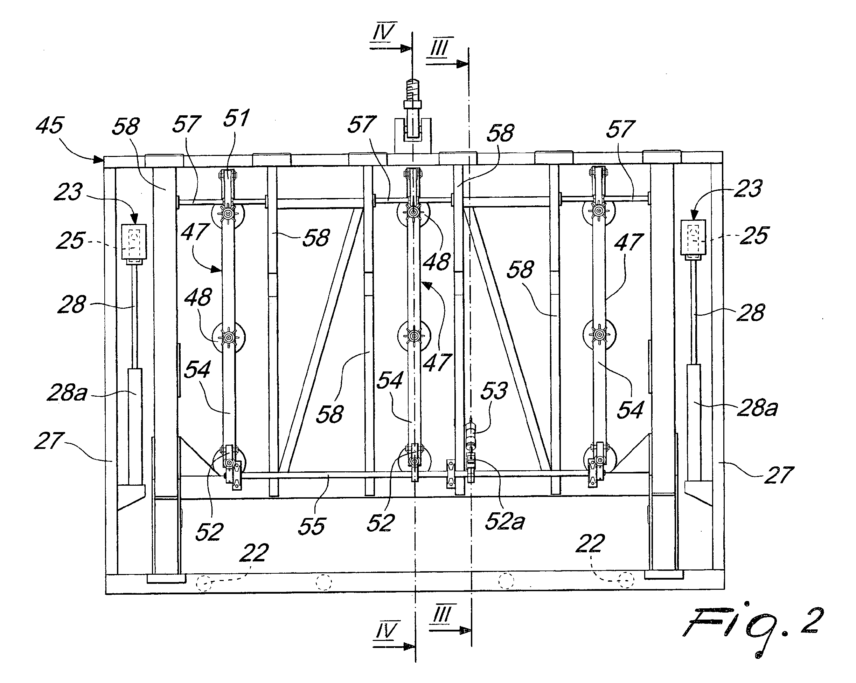

Figure 2 is a rear view of said grip unit of an apparatus according to the invention;
Figure 3 is a sectional side view, taken along the line III-III of Figure 2, of an apparatus according to the invention;
Figure 4 is a sectional side view, taken along the line IV-IV of Figure 2, of an apparatus according to the invention;
Figure 5 is a side view of an apparatus according to the invention in a second embodiment;
Figure 6 is a perspective view of a grip unit for packs of sheets as in the second embodiment of an apparatus according to the invention:
Figure 7 is a view of a constructive detail of an apparatus according to the invention;
Figure 8 is a view of a constructive variation of the detail of Figure 7;
Figure 9 is a rear view of an apparatus according to the invention;
Figure 10 is a side view of a handling apparatus for packs of sheet-like products according to the invention.

With reference to the figures, an apparatus for handling sheet-like products in crates, in packs and as individual sheet-like products according to the invention is generally designated by the reference numeral 10.

The apparatus 10 is constituted by a wheeled and motorized structure 11, which can perform a translational motion on rails 12 in the longitudinal direction of a storage unit 13 with which the apparatus 10 interacts.

A supporting cross-member 14 is provided on the upper part of the structure 11 and protrudes from at least one side of the structure 11, substantially at right angles to the direction of translational motion of the structure 11.

A grip unit 15 is arranged slidingly on the supporting cross-member 14 and comprises, integrated in a single flat frame 45:
- means for lifting, conveying and depositing packs, crates and the like 16 of sheet-like products 17 from a parking station 18 for the packs 16, which is associated with the storage unit 13, toward the inclined frames 19 which are part of the storage unit 13,
- grip means for conveying and depositing individual sheet-like products 17 from an inclined frame 19 of the storage unit 13 to another inclined frame or to a subsequent machine for conveying and/or working sheet-like products 17.

The grip unit 15 is provided with a motorized slider 20, which is arranged so that it can perform a translational motion on the cross-member 14.

The slider 20 supports a flat frame 45.

The means for lifting, conveying and depositing packs 16 are formed, below the frame 45, by supports 22, which are four in the example described here, for a pack 16, and are formed in an upper region by two locking devices 23, described in greater detail hereinafter, for the pack 16.

The flat frame 45 has an inclined arrangement which is substantially parallel to the inclined frames 19 of the storage unit 13.

The grip means for conveying and depositing a single sheet-like product 17 are of the type with suckers 48.

The suckers 48 can be extracted/retracted with respect to a supporting surface for the packs 16 by means of a chassis 47 which supports them.

The chassis 47 is rigidly coupled to the frame 45 by means of upper linkages 51 and lower linkages 52, so as to produce a movement of the articulated-quadrilateral type.

Actuation means, described in greater detail hereinafter, for varying the arrangement of the chassis 47 are provided.

The chassis 47 is composed of three uprights 54, each of which is rigidly coupled to the frame 45 by means of an upper linkage 51 and a lower linkage 52.

One end of each one of the lower linkages 52 is fixed to a driving shaft 55, which in turn is pivoted to the frame 45.

The driving shaft 55 is turned by a lever 56, which is actuated by an actuation element.

The lever 56 is fixed to the shaft 55 at one end and is rigidly coupled, at the other end, to an actuation cylinder 53, one end of which is pivoted to the frame 45.

The lever 56 and the cylinder 53 form the actuation means cited earlier.

Each one of the upper linkages 51 is pivoted at one end to the corresponding upright 54 and at the other end to a cylindrical bar 57, which is rigidly coupled to two vertical elements 58 of the frame 45.

The frame 45 is supported by the slider 20 with vertical movement means 24, described in greater detail hereinafter, for the operations for loading/unloading a pack 16 from a parking station 18 or from an inclined frame 19 of the storage unit 13.

Each locking device 23 is formed by an abutment element 25, which can move at right angles to the frame 45 by means of a first actuator 26.

The abutment element 25 retains the pack 16 against the frame 45.

The first actuator 26 in turn can perform a translational motion parallel to the uprights 27 of the frame 45 by means of a second actuator 28, which is fixed to one of the uprights 27 and is adapted to arrange the locking device 23 at a height which allows the abutment element 25 to surround the upper edge of the pack 16.

The abutment element 25 can rotate from a disengagement position to a substantially vertical position for gripping the pack 16 and vice versa, by means of a third rotation actuator 29.

The vertical movement means 24 for the frame 45 are constituted by a motor drive 30, which is rigidly coupled to the slider 20 and is connected functionally to an actuator of the worm-screw type or the like, the lower end 32 of which supports the frame 45.

The first actuator 26 and the second actuator 28 are of a type selected among hydraulic, pneumatic, worm-screw or the like.

The third actuator 29 is of a type chosen among pneumatic, hydraulic, electromechanical or the like.

In the examplary embodiment described here, the apparatus 10 comprises, as mentioned, two locking devices 23.

The first actuators 26 and the third actuators 29 of the two devices 23 are arranged at the sides of the frame 45, and the body 28a of each second actuator 28 is rigidly coupled to a corresponding lateral upright 27 of the flat frame 45.

The frame 45 as described is therefore capable of gripping and conveying packs of sheets, when the suckers 48 are retracted, and of carrying a single sheet-like product, when the suckers 48 are extracted.

In order to move the suckers 48 from a retracted configuration to an extracted configuration, the cylinder 53 is actuated so that it applies traction, turning the lever 56 upward.

The lever 56 thus turned in turn rotates the shaft 55, which moves the lower linkages 52 that are coupled thereto.

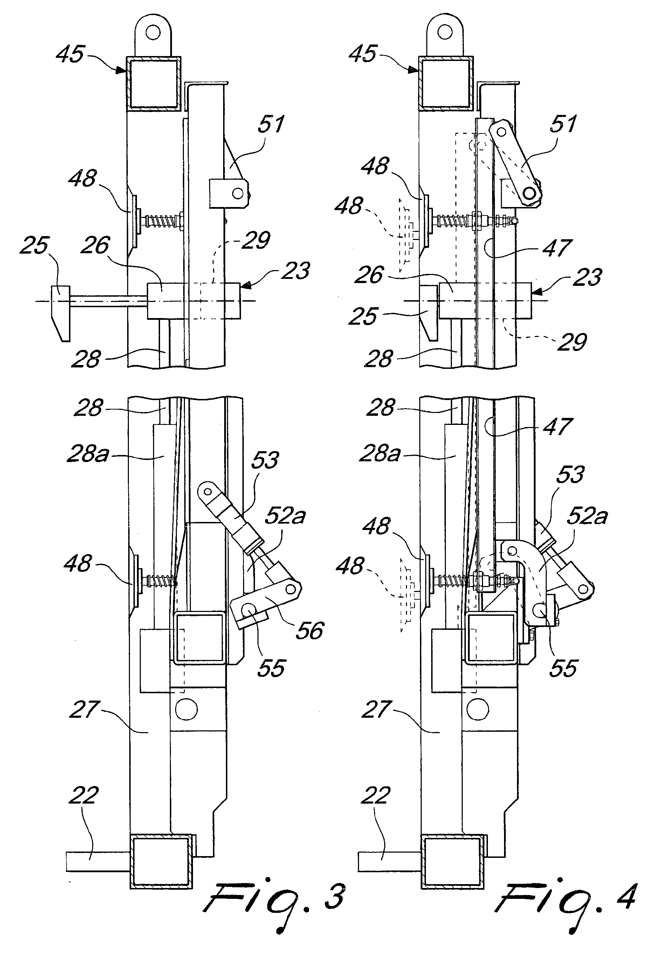

Each one of the lower linkages 52 moves the connected upright 54, each of the uprights 54 assuming a configuration in which the suckers 48 protrude from the supporting surface for the packs, as shown in Figure 4.

In order to return the suckers 48 to the retracted configuration, the cylinder 53 is actuated so that it pushes against the lever 56, which turns the shaft 55 in the opposite direction.

The wheeled structure 11 is constituted by two lateral columns 34 and by the cross-member 14, which lies above them.

The lateral columns 34 are supported by sliding blocks 35, which are provided with wheels 36 which can run on a pair of rails 12, said rails being formed on a monolithic footing 37.

The translational motion of the wheeled structure 11 on the rails 12 is actuated by a gearmotor 38 for driving a pinion which meshes with a rack provided on at least one of the rails 12.

The wheeled structure 11 is provided with anti-tip means for coupling to the rails 12.

The anti-tip means are formed by the wheels 36, which can run on top of the rails 12, which have a double-T transverse cross-section, and by anti-tip secondary wheels 39, which are pivoted to a bracket 40 which protrudes downward from the sliding blocks 35 of the wheeled structure 11, and are arranged so as to run on the internal face 41, which is undercut, of one of the upper wings 42 which form the double-T cross-section of the rails 12.

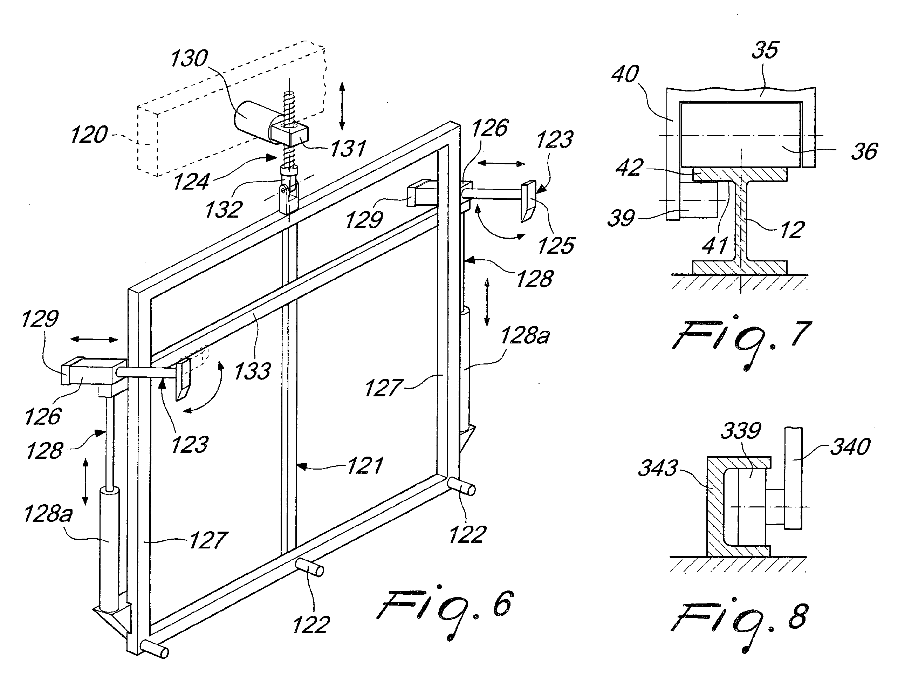

A constructive variation of the anti-tip means is shown in Figure 8.

Here, the anti-tip means are again formed by the wheels 36, which run on the rails 12 having a double-T transverse cross-section, and cooperate with anti-tip secondary wheels 339, which are pivoted to a bracket 340 which protrudes downward from the sliding blocks 35 and are arranged so as to slide within the undercut space of a longitudinal member 343 which has a C-shaped transverse cross-section and runs parallel to the rails 12.

The parking station 18 is formed by an inclined frame, which can perform a translational motion on rails proximate to the storage unit 13.

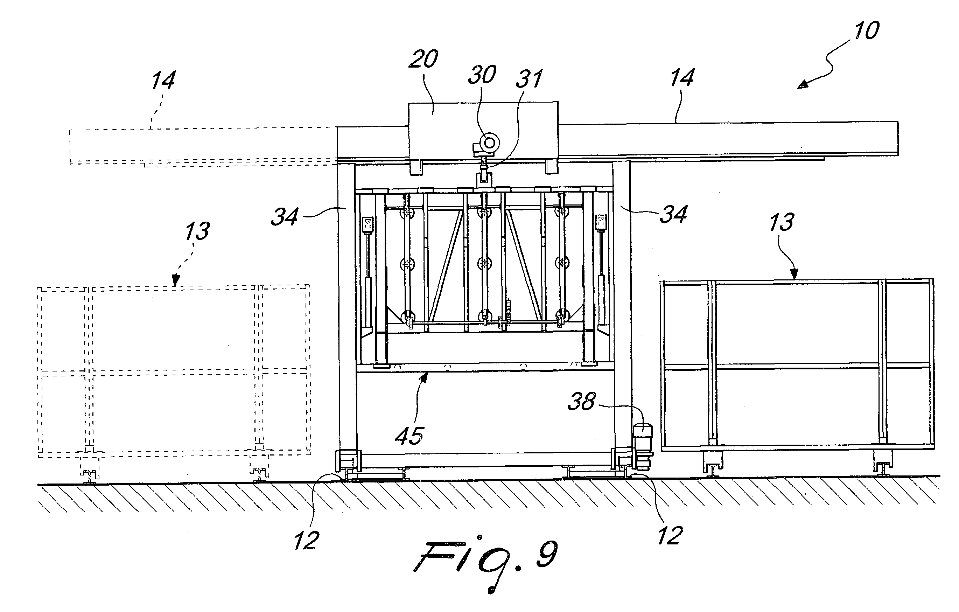

Figure 9 illustrates in solid lines a constructive variation of the invention, in which the cross-member 14, on which the slider 20 for supporting the frame 45 performs a translational motion, lies transversely to the advancement direction of the wheeled structure 11, on a single side of the structure 11.

Figure 9 shows, in dashed lines, a different constructive variation of the apparatus according to the invention, in which the cross-member 14 lies, transversely to the advancement direction of the wheeled structure 11, on the two sides of the structure 11, thus being more flexible in use and capable of serving a larger storage unit.

The flat frame 45 is connected to the slider 20 by interposing oscillation means of the pantograph type 49, of a per se known type, which are pivoted at one end to the frame 45 and at the other end to the slider 20.

The oscillation means allow the frame not only to move up and down in order to grip a single sheet-like product or a pack but also to assume the best inclination for performing these operations.

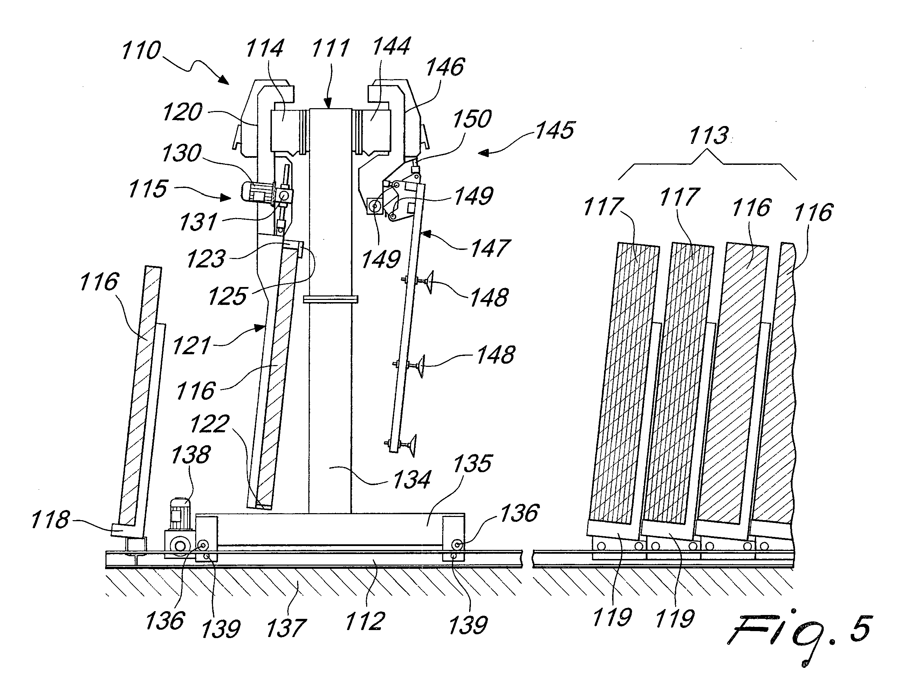

A second embodiment of the apparatus according to the invention is shown in Figures 5 and 6, in which it is generally designated by the reference numeral 110.

The apparatus 110 is also constituted by a wheeled and motorized structure 111, which can perform a translational motion on rails 112 in the longitudinal direction of a storage unit 113 with which the apparatus 110 interacts.

A first supporting cross-member 114 is provided on the upper part of the structure 111 and protrudes on one side, or on both sides, as in the first embodiment 10 of the invention described above, of the structure 111, substantially at right angles to the direction of translational motion of the structure 111.

A first grip unit 115 slides on the first supporting cross-member 114 and is adapted to lift, convey and deposit packs and the like 116 from a parking station 118 for packs 116 toward inclined frames 119 which are part of the storage unit 113.

**The structure 111 supports, on the opposite side with respect to the** first grip unit 115, parallel to the first cross-member 114, a second cross-member 144, which likewise protrudes from one or both of the sides of the structure 111.

The second cross-member 144 supports a second grip unit 145, which is adapted to lift, convey and deposit individual sheet-like products 117 from an inclined frame 119 of the storage unit 113 to another inclined frame or to a subsequent machine for conveying and/or working sheet-like products 117.

The first grip unit 115 is constituted by a motorized slider 120, which is arranged so as to perform a translational motion on the first cross-member 114.

The slider 120 supports a flat handling frame 121 for packs 116, which is provided in a lower region with supports 122 for a pack 116 and, in an upper region, with two locking devices 123 for the pack 116.

The handling frame 121 is inclined and substantially parallel with respect to the inclined frames 119 of the storage unit 113.

The flat handling frame 121 for packs 116 is supported by the slider 120 by way of vertical movement means 124 for the frame 121, for the operations for loading/unloading a pack 116 from a parking station 118 or from an inclined frame 119 of the storage unit 113.

Each one of the locking devices 123 is formed by an abutment element 125, which can perform a translational motion at right angles to the flat handling frame 121 by means of a first actuator 126.

As in the first embodiment described above, the abutment element 125 is adapted to retain the pack 116 against the handling frame 121.

In turn, the first actuator 126 can perform a translational motion parallel to the uprights 127 of the handling frame 121 by means of a second actuator 128, which is fixed to one of the uprights 127.

The second actuator 128 is adapted to arrange the locking device 123 at a height which allows the abutment element 125 to surround the upper edge of the conveyed pack 116.

The abutment element 125 can rotate from a disengagement position to a substantially vertical position for gripping the pack 116 and vice versa by means of a third rotation actuator 129.

The vertical movement means 124 for the handling frame 121 are constituted by a motor drive 130, which is rigidly coupled to the slider 120 and is functionally connected to an actuator of the worm-screw type 131 or the like, the lower end 132 of which supports the handling frame 121.

The first actuator 126, the second actuator 128 and the third actuator 129 are of a type chosen among hydraulic, pneumatic, electromechanical, worm-screw, or the like.

As mentioned, the apparatus 110 comprises two locking devices 123.

The first actuators 126 and the third actuators 129 of the devices 123 are arranged at the sides of the handling frame 121 and are supported by a cross-member 133, which in turn is supported by two second actuators 128, the bodies 128a of which are each rigidly coupled to one of the lateral uprights 127 of the handling frame 121.

The second grip unit 145 for individual sheet-like products 117 is constituted by an additional motorized slider 146, which is arranged so as to perform a translational motion on the second cross-member 144.

The additional slider 146 supports a flat grip frame 147 for individual sheet-like products 117, of the type with suckers 148.

The grip frame 147 with suckers 148 is connected to the additional slider 146 by interposing oscillation means of the pantograph type 149 and an additional pneumatic cylinder 150, which acts vertically, has a support and vertical handling function, and is pivoted between the upper end of the frame 147 with suckers 148 and the additional slider 146.

In this second embodiment 110 of the apparatus according to the invention, there are two independent frames, respectively 121 and 147, the first frame 121 being provided for the packs 116 and the second frame 147 being provided for the individual products 117.

This second embodiment with two frames can operate, if necessary, with both frames simultaneously.

The invention also relates to an apparatus for handling only sheet-like products in crates or packs, particularly but not exclusively for storage units with perpendicular translational motion.

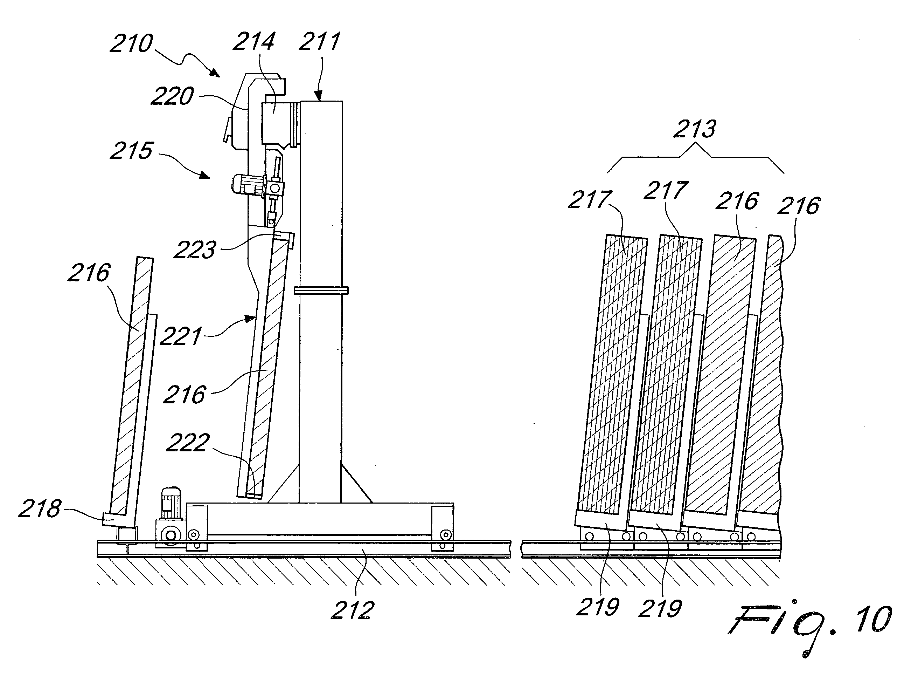

This apparatus, shown in Figure 10 and designated therein by the reference numeral 210, is constituted, like the first and second embodiments described above, by a wheeled and motorized structure 211, which can perform a translational motion on rails 212 in the longitudinal direction of a storage unit 213 with which the apparatus 210 interacts.

A supporting cross-member 214 is provided on the upper part of the structure 211 and protrudes from one or both sides of the structure 211 substantially at right angles to the direction of translational motion of the structure 211.

A grip unit 215 is arranged slidingly on the supporting cross-member 214 and is adapted to lift, convey and deposit packs 216 of sheet-like products 217 from a parking station 218 associated with the storage unit 213 toward inclined frames 219 which are part of the storage unit 213.

The grip unit 215 is constituted by a motorized slider 220, which is arranged so as to perform a translational motion on the cross-member 214.

The slider 220 supports a flat handling frame 221 for packs 216, which is provided in a lower region with supports 222 for a pack 216 and in an upper region with locking devices 223, which are fully similar to the devices 23 and 123 described earlier.

The apparatus 210 therefore has a single frame 221 for packs.

The apparatus 210, therefore, can be installed in storage units which are already provided with handling means for individual sheet-like products.

In practice it has been found that the invention thus described solves the problems noted in known types of apparatus for handling packs of sheet-like products.

In particular, the present invention provides an apparatus which can be used easily in the most disparate storage unit layouts, since it can in fact slide on a rail and allows to avoid the installation of expensive and scarcely flexible scaffolding for hoists.

Further, the present invention provides an apparatus which is versatile and flexible in use.

The apparatus can in fact be installed, as described, with a grip unit for individual sheet-like products or without it, and is thus usable for conveying packs, or sheet-like products, or both together, according to requirements.

Further, the present invention provides an apparatus which allows to automate said loading and unloading operations both for packs of sheet-like products and for the sheet-like products themselves.

Moreover, the present invention provides an apparatus which is safer than known types of apparatus by means of the stability of the movement on rails and of the anti-tip means with which the apparatus is provided.

Further, the present invention provides an apparatus for moving only packs or crates of sheet-like products which can be combined with storage units which are already provided with apparatuses for conveying individual sheet-like products.

Moreover, the present invention provides an apparatus for handling crates of sheet-like products and individual sheet-like products which can be manufactured with known types of systems and technologies at lower costs than apparatuses of a known type of equal capacity.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art,

## Claims

1. An apparatus for handling sheet-like products in crates or in packs, particularly but not exclusively for storage units with perpendicular translational motion, **characterized in that** it is constituted by a wheeled and motorized structure (11; 111; 211), which can perform a translational motion on rails (12; 112; 212) in the longitudinal direction of a storage unit (13; 113; 213) with which the apparatus (10; 110; 210) interacts, a supporting cross-member (14; 114; 214) being provided on the upper part of said structure (11; 111; 211) and protruding from at least one side of the structure (11; 111; 211), at right angles to the direction of translational motion of said structure (11; 111; 211), a grip unit (15; 115; 215) being arranged slidingly on said supporting cross-member (14; 114; 214) and comprising, integrated in a single flat frame (45), means (31, 32) for lifting, conveying and depositing packs (16; 116; 216), of sheet-like products (17; 117; 217), from a parking station (18; 118; 218) for said packs (16; 116; 216), which is associated with said storage unit (13; 113; 213), toward inclined frames (19; 119; 219), which are part of said storage unit (13; 113; 213), and grip means (48) for lifting, conveying and depositing a single sheet-like product (17) from an inclined frame (19) of said storage unit (13) to another inclined frame or to a subsequent machine for conveying and/or working said sheet-like products (17).

2. The apparatus according to claim 1, **characterized in that** said grip unit (15; 115; 215) for packs of sheet-like products (16; 116; 216) is provided with a motorized slider (20; 120; 220), which is arranged so as to perform a translational motion on said cross-member (14; 114; 214), said slider (20; 120; 220) supporting a flat handling frame (45; 121; 221), said means for lifting, conveying and depositing packs, crates (16; 116; 216) are formed, below the frame (45; 121; 221), by at least two supports (22; 122; 222) for a pack (16; 116; 216), and in an upper region by at least one locking device (23; 123; 223) for said pack (16; 116; 216), said handling frame (45; 121; 221) being inclined and parallel with respect to said inclined frames (19; 119; 219) of the storage unit (13; 113; 213).

3. The apparatus according to claim 3, **characterized in that** said frame (45; 121) is supported by said slider (20; 120) with means (24; 124) for vertical movement of said frame for the operations for loading/unloading a pack (16; 116) from a parking station (18; 118) or from an inclined frame (19; 119) of the storage unit (13; 113).

4. The apparatus according to claim 2 or 3, **characterized in that** said at least one locking device (23; 123) is formed by an abutment element (25; 125), which can move at right angles to the frame (45; 121) by means of a first actuator (26; 126), said abutment element (25; 125) being adapted to retain said pack (16; 116) against said frame (45; 121), said first actuator (26; 126) being in turn able to perform a translational motion parallel to the uprights (27; 127) of the frame (45; 121) by means of a second actuator (28; 128), which is fixed to one of said uprights (27; 127), and being adapted to arrange said locking device (23; 123) at a height which allows the abutment element (25; 125) to surround the upper edge of said pack (16; 116).

5. The apparatus according to claim 4, **characterized in that** said abutment element (25; 125) can rotate from a disengagement position to a substantially vertical position for gripping the pack (16; 116), and vice versa, by means of a third rotation actuator (29; 129).

6. The apparatus according to one or more of the claims 3 to 5, **characterized in that** said vertical movement means (24; 124) for said frame (45; 121) are constituted by a motor drive (30; 130), which is rigidly coupled to said slider (20; 120) and is functionally connected to an actuator of the worm-screw type, the lower end (32; 132) of which supports said frame (45; 121).

7. The apparatus according to one or more of claims 4 to 6, **characterized in that** said first actuator (26; 126) and said second actuator (28; 128) are of a type chosen among hydraulic, pneumatic, worm-screw.

8. The apparatus according to one or more of claims 5 to 8, **characterized in that** said third actuator (29; 129) is of a type chosen among pneumatic, hydraulic, electromechanical.

9. The apparatus according to one or more of claims 2 to 8, **characterized in that** it comprises two of said at least one locking devices (23; 123) for packs (16; 116), the first actuators (26; 126) and the third actuators (29; 129) of said two devices (23; 123) being arranged at the sides of the frame (45; 121), so that the bodies (28a) are each rigidly coupled to one of the lateral uprights (27; 127) of said flat frame (45; 121).

10. The apparatus according to claim 9, **characterized in that** the first actuators (126) and the third actuators (129) of said two devices (123) are arranged at the sides of the handling frame (121) and are supported by a cross-member (133), which in turn is supported by two second actuators (128), the bodies (128a) of which are each rigidly coupled to one of the lateral uprights (127) of said handling frame (121).

11. The apparatus according to claim 10, **characterized in that** said grip means for conveying and depositing individual sheet-like products (17) are of the type with suckers (48), said suckers (48) being extractable/retractable with respect to a supporting surface for said packs (16), by means of a chassis (47) which supports them, said chassis (47) being rigidly coupled to the frame (45) by means of upper linkages (51) and lower linkages (52), so as to produce an articulated-quadrilateral movement, actuation means being provided for varying the configuration of said chassis (47).

12. The apparatus according to claim 11, **characterized in that** said chassis (47) is composed of three uprights (54), each of which is coupled to the frame (45) by means of an upper linkage (51) and a lower linkage (52), one end of each of said lower linkages (52) being fixed to a handling shaft (55), which in turn is pivoted to the frame (45).

13. The apparatus according to claim 12, **characterized in that** the handling shaft (55) is turned by a lever (56), which is fixed on one side to the shaft (55) and on the opposite side is rigidly coupled to an actuation cylinder (53), in which one end is pivoted to the frame (45), said lever (56) and said cylinder (53) forming said actuation means.

14. The apparatus according to one claim 12 or 13, **characterized in that** each one of the upper linkages (51) is pivoted at one end to the corresponding upright (54) and is pivoted at the opposite end to a cylindrical bar (57), which is rigidly coupled to two vertical elements (58) of the frame (45).

15. The apparatus according to one or more of the preceding claims, **characterized in that** said wheeled structure (11) is constituted by two lateral columns (34) and by said cross-member (14) which lies above them, said lateral columns (34) being supported by sliding blocks (35), which are provided with wheels (36) which can run on a pair of said rails (12), which are formed on a monolithic footing (37).

16. The apparatus according to one or more of the preceding claims, **characterized in that** the translational motion of said wheeled structure (11) on said rails (12) is actuated by a gearmotor (38) for actuating a pinion which meshes with a rack arranged on at least one of said rails (12).

17. The apparatus according to one or more of the preceding claims, **characterized in that** said wheeled structure (11) is provided with anti-tip means for coupling to the rails (12).

18. The apparatus according to claim 17, **characterized in that** said anti-tip means are formed by said wheels (36), which can slide above said rails (12) having a double-T transverse cross-section, and by anti-tip secondary wheels (39), which are pivoted to a bracket (40) which protrudes downward from said sliding blocks (35) of the wheeled structure (11) and are arranged so as to slide on the undercut internal face (41) of one of the upper wings (42) which form the double-T cross-section of said rails (12).

19. The apparatus according to claim 17, **characterized in that** said anti-tip means are formed by said wheels (36), which can run on said rails (12) having a double-T transverse cross-section, and by anti-tip wheels (239), which are pivoted to a bracket (240) which protrudes downward from said sliding blocks (35) of the wheeled structure (11), and are arranged so as to slide within the undercut space of a longitudinal member which has a C-shaped transverse cross-section (243) and runs parallel to said rails (12).

20. The apparatus according to one or more of the preceding claims, **characterized in that** said parking station (18) is formed by an inclined frame which can perform a translational motion on rails proximate to said storage unit (13).

21. The apparatus according to one or more of the preceding claims, **characterized in that** said cross-member (14; 114), on which said slider (20; 120) for supporting the frame (45; 121) performs a translational motion, lies transversely to the advancement direction of the wheeled structure (11; 111) on a single side of said structure (11; 111).

22. The apparatus according to one or more of claims 1 to 20, **characterized in that** said cross-member (14; 114), on which said slider (20; 120) for supporting the frame (45; 121) performs a translational motion, lies transversely to the advancement direction of the wheeled structure (11; 111) on both sides of the structure (11; 111).

23. The apparatus according to one or more of the preceding claims, **characterized in that** said flat frame (45) is connected to said slider (20) by interposing oscillation means of the pantograph type (49), which are pivoted on one side to the frame (45) and on the other side to the slider (20).

24. The apparatus according to one or more of claims 1 to 10, **characterized in that** said wheeled and motorized structure (111) supports, on the opposite side with respect to said grip unit (115), parallel to said supporting cross-member (114), an additional cross-member (144), which protrudes from at least one side of the structure (111), for an additional grip unit (145), which is provided with grip means for lifting, conveying and depositing individual sheet-like products (117), from an inclined frame (119) of said storage unit (113) to another inclined frame or to a subsequent machine for conveying and/or working said sheet-like products (117).

25. The apparatus according to claim 24, **characterized in that** said additional grip unit (145) for sheet-like products (117) is constituted by an additional motorized slider (146), which is arranged so as to perform a translational motion on said additional cross-member (144), said additional slider (146) supporting a flat grip frame (147) for individual sheet-like products (117) of the type with suckers (148).

26. The apparatus according to claim 25, **characterized in that** said grip frame (147) with suckers (148) is connected to said additional slider (146) by interposing oscillation means of the pantograph type (149), and an additional pneumatic cylinder (150) which acts vertically, has a supporting and vertical movement function, and is pivoted between the upper end of said frame (147) with suckers (148) and said additional slider (146).

## Patentansprüche

1. Vorrichtung für den Transport von flächigen Erzeugnissen in Kisten oder in Packungen, insbesondere aber nicht ausschließlich für Lager mit senkrechter Translationsbewegung
**dadurch gekennzeichnet, dass**
diese aus
einer mit Reifen versehenen und motorisierten Konstruktion (11; 111; 211) besteht, welche eine Translationsbewegung auf Schienen (12; 112; 212) in der Langsrichtung des Lagers (13; 113; 213) ausfahren kann, mit dem die Vorrichtung (10; 110; 210) zusammenwirkt, einem tragenden Querträger (14; 114; 214), welcher an dem oberen Teil der Konstruktion (11; 111; 211) vorgesehen ist und an wenigstens einer Seite aus der Konstruktion (11; 111; 211) herausragt, im rechten Winkel zur der Richtung der Translationsbewegung der Konstruktion (11; 111; 211),
einem Halteelement (15; 115, 215), welches ausziehbar an dem tragenden Quertrager (14; 114; 214) ausgeführt ist und, integriert in einem flachen Rahmen (45), Mittel (31, 32) umfasst zum Heben, Fördern und Absetzen von Packungen (16; 116; 216), von flächigen Erzeugnissen (17; 117, 217), aus einer Packstation (18; 118; 218) für die Packungen (16; 116; 216), welche mit dem Lager (13; 113; 213) verbunden ist, in Richtung geneigter Rahmen (19; 119; 219), welche Teil des Lagers (13; 113; 213) sind, und
Greifmittel (48) zum Heben, Fordern und Absetzen eines einzigen flächigen Erzeugnisses (17) von einem geneigten Rahmen (19) des Lagers(13) zu einem anderen geneigten Rahmen oder an eine nachfolgende Maschine zum Fördern und/oder Bearbeiten des flächigen Erzeugnisses (17).

2. Vorrichtung nach Anspruch 1, **dadurch gekennzeichnet, dass**
das Halteelement (15; 115, 215) für die Packungen von flächigen Erzeugnissen (16, 116, 216) mit einem motorisierten Gleitstück (20; 120; 220) ausgestattet ist, welches derart angeordnet ist, dass es auf dem Querträger (14; 114; 214) eine Translationsbewegung ausführen kann, wobei das Gleitstück (20; 120; 220) einen flachen Transportrahmen (45; 121; 221) trägt, wobei das Mittel zum Anheben, Fördern und Absetzen von Packungen, Kästen (16, 116, 216), unterhalb des Rahmens (45, 121, 221) durch mindestens zwei Träger (22, 122, 222) für eine Packung (16, 116, 216), ausgebildet ist, und in einem oberen Bereich durch wenigstens eine Verriegelungseinrichtung (23; 123; 223) für die Packung (16; 116; 216), wobei der Transportrahmen (45; 121; 221) geneigt und parallel in Bezug auf die geneigten Rahmen (19; 119; 219) des Lagers (13; 113; 213) ist.

3. Vorrichtung nach Anspruch 3, **dadurch gekennzeichnet, dass**
der Rahmen (45; 121) getragen ist durch das Gleitstück (20; 120) mit einem Mittel (24; 124) zur vertikalen Bewegung des Rahmens für den Arbeitsgang des Beladens/Entladens einer der Packungen (16; 116) aus der Packstation (18, 118) oder von einem geneigten Rahmen (19; 119) des Lagers (13, 113).

4. Vorrichtung nach Anspruch 2 oder 3, **dadurch gekennzeichnet, dass**
mindestens eine Verriegelungseinrichtung (23; 123) durch einen Anschlag (25; 125) gebildet ist, welcher sich ich im rechten Winkel zu dem Rahmen (45; 121) mittels eines ersten Antriebs (26; 126) bewegen kann, wobei der Anschlag (25; 125) zum Halten der Packung (16; 116) gegen den Rahmen (45; 121) geeignet ist, der erste Antrieb (26; 126) wiederum ist in der Lage eine Translationsbewegung parallel zu den Ständern (27; 127) des Rahmens (45; 121) mittels eines zweiten Antriebs (28; 128) auszuführen, welcher an einem der Ständer (27; 127) befestigt ist, und ist dazu geeignet, die Verriegelungseinrichtung (23; 123) in einer Höhe anzuordnen, die dem Anschlag (25; 125) erlaubt, den oberen Rand der Verpackung (16; 116) einzufassen.

5. Vorrichtung nach Anspruch 4, **dadurch gekennzeichnet, dass**
der Anschlag (25; 125) aus einer Entkopplungsstellung in eine im Wesentlichen vertikale Stellung zum Greifen der Packung (16; 116) drehen kann, und umgekehrt, mittels eines dritten Rotationsantriebes (29; 129).

6. Vorrichtung nach einem oder mehreren der Ansprüche 3 bis 5, **dadurch gekennzeichnet, dass**
das vertikale Bewegungsmittel (24; 124) des Rahmens (45; 121) durch einen motorischen Antrieb (30; 130) gebildet ist, welcher starr an das Gleitstück (20; 120) gekoppelt ist und funktional mit einem Antrieb vom Typ einer Schnecken-Schraube verbunden ist, wobei das untere Ende (32; 132) davon den Rahmen (45; 121) trägt.

7. Vorrichtung nach einem oder mehreren der Ansprüche 4 bis 6, **dadurch gekennzeichnet, dass**
der erste Antrieb (26; 126) und der zweite Antrieb (28, 128) von der Bauart entweder ein hydraulischer, pneumatischer oder Schnecken-Schrauben ist.

8. Vorrichtung nach einem oder mehreren der Ansprüche 5 bis 8, **dadurch gekennzeichnet, dass** der dritte Antrieb (29, 129) von der Bauart entweder ein hydraulischer, pneumatischer oder elektromechanischer ist.

9. Vorrichtung nach einem oder mehreren der Ansprüche 2 bis 8, **dadurch gekennzeichnet, dass**
diese zwei der mindestens einen Verriegelungseinrichtungen (23, 123) für die Packungen (16; 116), die ersten Antriebe (26; 126) und die dritten Antriebe (29; 129) der beiden Verriegelungseinrichtungen (23; 123) an den Seiten des Rahmens (45; 121) angeordnet sind, so dass die Körper (28a) jeweils starr an einen der seitlichen Ständer (27; 127) des flachen Rahmens (45; 121) gekoppelt sind.

10. Vorrichtung nach Anspruch 9, **dadurch gekennzeichnet, dass**
die ersten Antriebe (126) und die dritten Antriebe (129) der beiden Verriegelungseinrichtungen (123) an den Seiten des Transportrahmens (121) angeordnet und durch einen Querträger (133) getragen werden, der wiederum getragen wird von zwei zweiten Antrieben (128), den Körpern (128a), von denen jeder starr an einen der seitlichen Ständer (127) des Transportrahmens (121) gekoppelt ist.

11. Vorrichtung nach Anspruch 10, **dadurch gekennzeichnet, dass** die Greifmittel zum Transportieren und Absetzen von einzelnen flächigen Erzeugnissen (17) der Bauart nach Saugnapfe (48) sind, die Saugnäpfe (48) sind ausziehbar/einziehbar bezüglich einer Auflagefläche der Packungen (16) mittels eines Chassis (47), das sie trägt, wobei das Chassis (47) starr mit dem Rahmen (45) mittels eines oberen Gestänges (51) und eines unteren Gestänges (52) gekoppelt ist, um so eine gelenkige vierseitige Bewegung zu erzeugen, wobei ein Antriebsmittel zur Veranderung der Beschaffenheit des Chassis (47) vorgesehen ist.

12. Vorrichtung nach Anspruch 11, **dadurch gekennzeichnet, dass** das Chassis (47) aus drei Ständern (54) aufgebaut ist, von denen jede mit dem Rahmen (45) mittels des oberen Gestänges (51) und des unteren Gestänges (52) gekoppelt ist, wobei ein Ende von jedem der unteren Gestänge (52) an einer Umlenkwelle (55) befestigt ist, die wiederum an dem Rahmen (45) drehbar gelagert ist.

13. Vorrichtung nach Anspruch 12, **dadurch gekennzeichnet, dass** die Umlenkwelle (55) durch einen Hebel (56) gedreht wird, welcher an einer Seite an der Welle (55) befestigt ist und an der anderen Seite starr an einen Antriebszylinder (53) gekoppelt ist, wobei ein Ende am Rahmen (45) drehbar gelagert ist, der Hebel (56) und der Zylinder (53) bilden das Antriebsmittel.

14. Vorrichtung nach einem Anspruch 12 oder 13, **dadurch gekennzeichnet, dass**
jede der oberen Gestange (51) an einem Ende an der entsprechenden Stütze (54) drehbar gelagert ist und am gegenüberliegenden Ende an einem zylindrischen Stab (57) drehbar gelagert ist, welcher starr mit zwei vertikalen Elementen (58) des Rahmens (45) gekoppelt ist.

15. Vorrichtung nach einem oder mehreren der vorhergehenden Ansprüche, **dadurch gekennzeichnet, dass**
die mit Reifen versehene Konstruktion (11) durch zwei seitlichen Säulen (34) und den Querträger (14) gebildet wird, welcher über diesen liegt, wobei die seitliche Säulen (34) durch Gleitblöcke (35) getragen werden, die mit Rädern (36)versehen sind, welche auf einem auf einem Paar der Schienen (12) laufen können, die auf einem monolithischen Fundament (37) ausgebildet sind.

16. Vorrichtung nach einem oder mehreren der vorhergehenden Ansprüche, **dadurch gekennzeichnet, dass**
die translatorische Bewegung der mit Rädern versehenen Konstruktion (11) auf den Schienen (12) betätigt wird durch einen Getriebemotor (38) zum Antrieb eines Zahnrades, welches in eine Zahnstange eingreift, die an mindestens einer der Schienen (12) angeordneten ist.

17. Vorrichtung nach einem oder mehreren der vorhergehenden Ansprüche, **dadurch gekennzeichnet, dass**
die mit Rädern versehene Konstruktion (11) mit Anti-Kipp-Mitteln zur Kopplung an den Schienen (12) vorgesehen ist.

18. Vorrichtung nach Anspruch 17, **dadurch gekennzeichnet, dass**
die Anti-Kipp-Mittel gebildet werden durch die Räder (36), welche über die Schienen (12) gleiten können welche einen Doppel-T-Querschnitt haben, und durch Anti-Kipp-sekundär Räder (39), welche drehbar an einer Halterung (40) gelagert sind, die von den Gleitblöcken (35) der mit Rädern versehenen Konstruktion (11) nach unten hervorsteht, und derart angeordnet sind, dass sie auf der hinterschnitten Innenfläche (41) einer der oberen Auskragungen (42) gleiten, die den Doppel-T-Querschnitt der Schienen (12) bilden.

19. Vorrichtung nach Anspruch 17, **dadurch gekennzeichnet, dass**
die Anti-Kipp-Mittel durch die Räder (36) gebildet werden, welche auf den Schienen (12) mit einem Doppel-T-Querschnitt laufen können, und durch Anti-Kipp-Räder (239), welche drehbar an einer Halterung (240) gelagert sind, die von den Gleitblöcken (35) der mit Rädern versehenen Konstruktion (11) nach unten hervorsteht, und derart angeordnet sind, dass sie innerhalb des hinterschnittenen Raumes eines länglichen Elements gleiten, das einen C-förmigen Querschnitt-hat und parallel zu den Schienen (12) läuft.

20. Vorrichtung nach einem oder mehreren der vorhergehenden Ansprüche, **dadurch gekennzeichnet, dass**
die Parkstation (18) durch einen geneigten Rahmen ausgebildet ist, der eine Translationsbewegung auf Schienen benachbart zu dem Lager (13) ausführen kann.

21. Vorrichtung nach einem oder mehreren der vorhergehenden Ansprüche, **dadurch gekennzeichnet, daß**
der Querträger (14; 114), an dem das Gleitstück (20; 120) zum Tragen des Rahmens (45; 121) eine translatorische Bewegung ausführt, quer zur Vorschubrichtung der mit Rädern versehenen Konstruktion (11; 111) auf einer Seite der Konstruktion (11; 111) liegt.

22. Vorrichtung nach einem oder mehreren der vorhergehenden Ansprüche 1-20, **dadurch gekennzeichnet, daß**
der Querträger (14; 114), an dem das Gleitstück (20; 120) zum Tragen des Rahmens (45; 121) eine translatorische Bewegung ausführt, quer zur Vorschubrichtung der mit Rädern versehenen Konstruktion (11; 111) auf beiden Seiten der Konstruktion (11; 111) liegt.

23. Vorrichtung nach einem oder mehreren der vorhergehenden Ansprüche, **dadurch gekennzeichnet, dass**
der flache Rahmen (45) mit dem Gleitstück (20) durch Einfügen einer Pendelvorrichtung verbunden ist, welche der Bauart nach ein Pantograph (49) ist, welches an einer Seite am Rahmen (45) und an der anderen Seite am Gleitstück (20) drehbar gelagert ist.

24. Vorrichtung nach einem oder mehreren der Ansprüche 1 bis 10, **dadurch gekennzeichnet, dass**
die mit Reifen versehene und motorisierte Konstruktion (111), auf der gegenüberliegenden Seite der in Bezug auf das Halteelement (115), parallel zu dem tragenden Querträger (114), einen zusätzlichen Querträger (144) trägt, der von mindestens einer Seite der Konstruktion (111) hervorsteht, für ein zusätzliches Halteelement (145), das mit einem Greifmittel versehen ist zum Anheben Transportieren und Absetzen von einzelnen flächigen Erzeugnissen (17), von einem geneigten Rahmen (119) des Lagers(113) zu einem anderen geneigten Rahmen oder an eine nachfolgende Maschine zum Fördern und/oder Bearbeiten des flächigen Erzeugnisses (17).

25. Vorrichtung nach Anspruch 24, **dadurch gekennzeichnet, dass**
das zusätzliche Halteelement (145) für flächige Erzeugnisse (17) gebildet ist durch ein zusätzliches motorisiertes Gleitstück (146), das so angeordnet ist, um eine Translationsbewegung auf dem zusätzlichen Querträger (144) auszuführen, wobei das zusätzliche Gleitstück (146) einen flachen Halterahmen (147) für einzelne flächige Erzeugnisse (17) trägt, der Bauart nach mit Saugnäpfen (148).

26. Vorrichtung nach Anspruch 25, **dadurch gekennzeichnet, dass**
der flache Halterahmen (147) mit Saugnäpfen (148) mit dem zusätzlichen Gleitstück (146) verbunden ist durch Einfügen einer Pendelvorrichtung, der Bauart nach ein Pantograph (149), und einem zusätzlichen pneumatischen Zylinder (150) der vertikal wirkt, eine tragende und eine vertikale Bewegung als Funktion hat, und drehbar zwischen dem oberen Ende des Rahmens (147) mit Saugnäpfen (148) und dem zusätzlichen Gleitstück (146) gelagert ist.

## Revendications

1. Appareil pour la manipulation de produits en forme de feuilles conditionnés en plateaux ou en paquets, en particulier mais non exclusivement pour des unités de stockage à déplacement en translation perpendiculaire, **caractérisé en ce qu'**il est constitué d'une structure à roues et motorisée (11 ; 111 ; 211), qui peut réaliser un mouvement de translation sur des rails (12 ; 112 ; 212) dans la direction longitudinale d'une unité de stockage (13 ; 113 ; 213) avec laquelle l'appareil (10 ; 110 ; 210) interagit, une traverse de support (14 ; 114 ; 214) étant prévue sur la partie supérieure de ladite structure (11 ; 111 ; 211) et dépassant d'au moins un côté de la structure (11 ; 111 ; 211), à angle droit par rapport à la direction de déplacement en translation de ladite structure (11 ; 111 ; 211), une unité de préhension (15 ; 115 ; 215) étant montée à coulissement sur ladite traverse de support (14 ; 114 ; 214) et comprenant, intégrés en un cadre (45) plat unique, des moyens (31 ; 32) pour soulever, déplacer et déposer des paquets (16 ; 116 ; 216) de produits en forme de feuilles (17 ; 117 ; 217), depuis un poste d'attente (18 ; 118 ; 218) pour lesdits paquets (16 ; 116 ; 216), qui est associé à ladite unité de stockage (13 ; 113 ; 213), jusqu'à des cadres inclinés (19 ; 119 ; 219) qui font partie de ladite unité de stockage (13 ; 113 ; 213), et des moyens de préhension (48) pour soulever, déplacer et déposer un produit individuel en forme de feuille (17) depuis un cadre incliné (19) de ladite unité de stockage (13) jusqu'à un autre cadre incliné ou jusqu'à une machine suivante pour déplacer et/ou traiter lesdits produits en forme de feuilles (17).

2. Appareil selon la revendication 1, **caractérisé en ce que** ladite unité de préhension (15 ; 115 ; 215) pour des paquets de produits en forme de feuilles (16 ; 116 ; 216) est munie d'une coulisse motorisée (20 ; 120 ; 220), qui est agencée de façon à réaliser un mouvement de translation sur ladite traverse de support (14 ; 114 ; 214), ladite coulisse (20 ; 120 ; 220) supportant un cadre de manipulation plat (45 ; 121 ; 221), lesdits moyens pour soulever, déplacer et déposer des paquets, des plateaux (16 ; 116 ; 216) sont formés, au dessous du cadre (45 ; 121 ; 221), par au moins deux supports (22 ; 122 ; 222) pour un paquet (16 ; 116 ; 216), et dans une zone supérieure par au moins un dispositif de verrouillage (23 ; 123 ; 223) pour ledit paquet (16 ; 116 ; 216), ledit cadre de manipulation (45 ; 121 ; 221) étant incliné et parallèle auxdits cadres inclinés (19 ; 119 ; 219) de l'unité de stockage (13 ; 113 ; 213).

3. Appareil selon la revendication 3, **caractérisé en ce que** ledit cadre (45 ; 121) est supporté par ladite coulisse (20 ; 120) avec des moyens (24 ; 124) pour le déplacement vertical dudit cadre pour les opérations de chargement et déchargement d'un paquet (16 ; 116) depuis un poste d'attente (18 ; 118) ou depuis un cadre incliné (19 ; 119) de l'unité de stockage (13 ; 113).

4. Appareil selon l'une des revendications 2 ou 3, **caractérisé en ce que** ledit au moins un dispositif de verrouillage (23 ; 123) est formé par un élément de butée (25 ; 125), qui peut se déplacer à angle droit par rapport au cadre (45 ; 121) au moyen d'un premier actionneur (26 ; 126), ledit élément de butée (25 ; 125) étant adapté pour retenir ledit paquet (16 ; 116) contre ledit cadre (45 ; 121), ledit premier actionneur (26 ; 126) étant à son tour apte à réaliser un mouvement de translation parallèle aux montants (27 ; 127) du cadre (45 ; 121) au moyen d'un second actionneur (28 ; 128), qui est fixé à l'un des montants (27 ; 127), et étant adapté pour disposer ledit dispositif de verrouillage (23 ; 123) à une hauteur qui permet à l'élément de butée (25 ; 125) d'entourer le bord supérieur dudit paquet (16 ; 116).

5. Appareil selon la revendication 4, **caractérisé en ce que** ledit élément de butée (25 ; 125) peut pivoter depuis une position de libération jusqu'à une position sensiblement verticale pour agripper le paquet (16 ; 116), et vice versa, au moyen d'un troisième actionneur rotatif (29 ; 129).

6. Appareil selon l'une au moins des revendications 3 à 5, **caractérisé en ce que** lesdits moyens de mouvement vertical (24 ; 124) pour ledit cadre (45 ; 121) sont constitués d'un entrainement motorisé (30 ; 130), qui est couplé rigidement à ladite coulisse (20 ; 120) et qui est fonctionnellement connecté à un actionneur de type vis sans fin, dont l'extrémité inférieure (32 ; 132) supporte ledit cadre (45 ; 121).

7. Appareil selon l'une au moins des revendications 4 à 6, **caractérisé en ce que** ledit premier actionneur (26 ; 126) et ledit second actionneur (28 ; 128) sont d'un type choisi parmi des actionneurs hydrauliques, pneumatiques, à vis sans fin.

8. Appareil selon l'une au moins des revendications 5 à 8, **caractérisé en ce que** ledit troisième actionneur (29 ; 129) est d'un type choisi parmi les actionneurs pneumatiques, hydrauliques, électromécaniques.

9. Appareil selon l'une au moins des revendications 2 à 8, **caractérisé en ce qu'**il comprend deux desdits au moins un dispositif de verrouillage (23 ; 123) pour des paquets (16 ; 116), les premiers actionneurs (26 ; 126) et les troisième actionneurs (29 ; 129) desdits deux dispositifs (23 ; 123) étant agencés sur les côtés du cadre (45 ; 121), de telle sorte que les corps (28a) sont chacun rigidement couplés à l'un des montants latéraux (27 ; 127) dudit cadre plat (45 ; 121).

10. Appareil selon la revendication 9, **caractérisé en ce que** les premiers actionneurs (126) et les troisièmes actionneurs (129) desdits deux dispositifs (123) sont agencés sur les côtés du cadre de manipulation (121) et sont supportés par une traverse (133), qui à son tour est supportée par deux seconds actionneurs (128), dont les corps (128a) sont chacun rigidement couplés à l'un des montants latéraux (127) dudit cadre de manipulation (121).

11. Appareil selon la revendication 10, **caractérisé en ce que** lesdits moyens de préhension pour déplacer et déposer des produits individuels en forme de feuille (17) sont du type muni de ventouses (48), lesdites ventouses (48) étant déployables et rétractables par rapport à une surface support pour lesdits paquets (16), au moyen d'un châssis (47) qui les supporte, ledit châssis (47) étant couplé rigidement au cadre (45) au moyen de liaisons supérieures (51) et de liaisons inférieures (52), de façon à permettre un mouvement articulé selon quatre directions, des moyens d'actionnement étant prévus pour modifier la configuration dudit châssis (47).

12. Appareil selon la revendication 11, **caractérisé en ce que** ledit châssis (47) est composé de trois montants (54), chacun d'eux étant couplé au cadre (45) au moyen d'une liaison supérieure (51) et d'une liaison inférieure (52), une extrémité de chacune des liaisons inférieures (52) étant fixée à un arbre de manipulation (55) qui à son tour pivote sur le cadre (45).

13. Appareil selon la revendication 12, **caractérisé en ce que** l'arbre de manipulation (55) est entraîné en rotation par un levier (56), qui est fixé selon un côté à l'arbre (55) et qui est selon le côté opposé couplé rigidement à un vérin d'actionnement (53), dont une extrémité est articulée sur le cadre (45), ledit levier (56) et ledit vérin (53) formant lesdits moyens d'actionnement.

14. Appareil selon l'une des revendications 12 ou 13, **caractérisé en ce que** chacune des liaisons supérieures (51) est articulée à une extrémité sur le montant (54) correspondant et est articulée à l'extrémité opposée à une barre cylindrique (57), laquelle est rigidement couplée à deux éléments verticaux (58) du cadre (45).

15. Appareil selon l'une au moins des revendications précédentes, **caractérisé en ce que** ladite structure à roues (11) est constituée de deux colonnes latérales (34) et de ladite traverse (14) qui les relie en partie supérieure, lesdites colonnes latérales (34) étant supportées par des blocs coulissants (35), qui sont munis de roues (36) qui peuvent rouler sur deux desdits rails (12), qui sont formés sur une base monolithique (37).

16. Appareil selon l'une au moins des revendications précédentes, **caractérisé en ce que** le mouvement de translation de ladite structure à roues (11) sur lesdits rails (12) est généré par un motoréducteur (38) pour actionner un pignon qui engrène avec une crémaillère prévue sur l'un au moins desdits rails (12).

17. Appareil selon l'une au moins des revendications précédentes, **caractérisé en ce que** ladite structure à roues (11) est munie de moyens anti-basculement pour coupler aux rails (12).

18. Appareil selon la revendication 17, **caractérisé en ce que** lesdits moyens anti-basculement sont formés par lesdites roues (36), qui peuvent coulisser au dessus desdits rails (12) ayant une section transversale en double T, et par des roues secondaires anti-basculement (39), qui pivotent sur une console (40) qui dépasse vers le bas à partir desdits blocs coulissants (35) de la structure à roues (11) et qui sont agencées pour coulisser sur la face interne en contre dépouille (41) de l'une des ailes supérieures (42) qui forment la section transversale en double T desdits rails (12).

19. Appareil selon la revendication 17, **caractérisé en ce que** lesdits moyens anti-basculement sont formés par lesdites roues (36), qui peuvent rouler sur lesdits rails (12) ayant une section transversale en double T, et par des roues anti-basculement (239), qui sont montées pivotantes sur une console (240) qui dépasse vers le bas à partir desdits blocs coulissants (35) de la structure à roues (11), et qui sont agencées de façon à coulisser à l'intérieur d'un espace en contre dépouille d'un élément longitudinal qui a une section transversale en forme de C (243) et qui se déplace parallèlement auxdits rails (12).

20. Appareil selon l'une au moins des revendications précédentes, **caractérisé en ce que** ledit poste d'attente (18) est formé par un cadre incliné qui peut se déplacer en translation sur des rails proches de l'unité de stockage (13).

21. Appareil selon l'une au moins des revendications précédentes, **caractérisé en ce que** ladite traverse (14 ; 114), sur laquelle se déplace en translation ladite coulisse (20 ; 120) pour supporter le cadre (45 ; 121), s'étend transversalement par rapport à la direction d'avance de la structure à roues (11 ; 111) sur un seul côté de ladite structure (11 ; 111).

22. Appareil selon l'une au moins des revendications 1 à 20, **caractérisé en ce que** ladite traverse (14 ; 114), sur laquelle se déplace en translation ladite coulisse (20 ; 120) pour supporter le cadre (45 ; 121), s'étend transversalement par rapport à la direction d'avance de la structure à roues (11 ; 111) sur l'un et l'autre des côtés de la structure (11 ; 111).

23. Appareil selon l'une au moins des revendications précédentes, **caractérisé en ce que** ledit cadre plat (45) est connecté à ladite coulisse (20) par des moyens intermédiaires d'oscillation de type pantographe (49), qui sont articulés d'un côté au cadre (45) et de l'autre côté à la coulisse (20).

24. Appareil selon l'une au moins des revendications 1 à 10, **caractérisé en ce que** la structure à roues et motorisée (111) supporte, sur le côté opposé par rapport à ladite unité de préhension (115), parallèlement à ladite traverse de support (114), une traverse additionnelle (144), qui dépasse d'au moins un côté de la structure (111), pour une unité de préhension additionnelle (145), qui est adaptée pour soulever, déplacer et déposer des produits en forme de feuilles individuelles (117), depuis un cadre incliné (119) de ladite unité de stockage (113) jusqu'à un autre cadre incliné ou jusqu'à une machine suivante pour déplacer et/ou traiter lesdits produits en forme de feuilles (117).

25. Appareil selon la revendication 24, **caractérisé en ce que** ladite unité de préhension additionnelle (145) pour des produits en forme de feuilles (117) est constituée par une coulisse motorisée additionnelle (146), qui est agencée de façon à réaliser un mouvement de translation sur ladite traverse additionnelle (144), ladite coulisse additionnelle (146) supportant un cadre de préhension plat (147) du type ayant des ventouses (148), pour des produits en forme de feuilles individuelles (117).

26. Appareil selon la revendication 25, **caractérisé en ce que** ledit cadre de préhension (147) avec des ventouses (148) est connecté à ladite coulisse additionnelle (146) par des moyens d'oscillation interposés de type pantographe (149), et un vérin pneumatique additionnel (150), qui agit verticalement, a une fonction de mouvement vertical et de support, et est articulé entre l'extrémité supérieure dudit cadre (147) à ventouses (148) et ladite coulisse additionnelle (146).
